# EUROPÄISCHE PATENTSCHRIFT

(11) **EP 4 067 013 B1**
(45) Veröffentlichungstag und Bekanntmachung des Hinweises auf die Patenterteilung: **02.12.2026**
(21) Anmeldenummer: 22164766.2
(22) Anmeldetag: 28.03.2022
(51) Int. Cl.: B25J 9/16, G05B 19/418

(54) **VERFAHREN ZUR BEARBEITUNG EINES FAHRZEUGSTRUKTURBAUTEILS**
METHOD FOR PROCESSING A STRUCTURAL COMPONENT OF A VEHICLE
PROCÉDÉ D'USINAGE D'UN COMPOSANT STRUCTURAL DE VÉHICULE

(30) Priorität: 29.03.2021 DE 102021107887
(43) Veröffentlichungstag der Anmeldung: 05.10.2022
(73) Patentinhaber: Broetje-Automation GmbH, 26180 Rastede (DE)
(72) Erfinder: Eickhorst, Dirk, 26316 Varel (DE)
(74) Vertreter: Gottschald Patentanwälte Partnerschaft mbB

(56) Entgegenhaltungen:
- EP-A2- 3 620 273
- WO-A1-2019/234249
- US-A1- 2017 080 567
- US-A1- 2020 361 091

## Beschreibung

Die Erfindung betrifft ein Verfahren zur Bearbeitung mindestens eines Flugzeugstrukturbauteils in einer Bearbeitungsumgebung unter Einsatz eines Cobots gemäß Anspruch 1, eine Systemsteuerung zum Betrieb eines Cobots gemäß Anspruch 16 sowie einen Cobot aufweisend eine solche Systemsteuerung gemäß Anspruch 17.

Aus der WO 2019/234249 A1 ist ein Verfahren zur Bearbeitung mindestens eines Flugzeugstrukturbauteils in einer Bearbeitungsumgebung unter Einsatz eines Cobots im Zusammenwirken mit einem menschlichen Bearbeiter beschrieben, wobei der Cobot über einen Manipulator mit mindestens einem Endeffektor zur Bearbeitung des Flugzeugstrukturbauteils und über eine Antriebsanordnung zum Bewegen des Cobots verfügt, wobei eine dem Cobot zugeordnete Sensoranordnung zum Ermitteln von Bildinformationen der Bearbeitungsumgebung vorgesehen ist, wobei in einer Arbeitsroutine das Flugzeugstrukturbauteil gemäß einem mittels einer Systemsteuerung erzeugten Bearbeitungsplan mit mindestens einer Bearbeitungsaktion bearbeitet wird.

Ferner ist beispielsweise auf Seite 42, Zeilen 26 bis 33 der WO 2019/234249 A1 eine Qualitätsinspektion beschrieben, in welcher eine Analyse der Abweichungen "as planned" vs. "as built" durchgeführt wird, woraufhin von Recheneinheiten in einer Smart-Factory-Umgebung automatisch Maßnahmen ausgelöst werden können.

Auf Seite 65, Zeilen 6 bis 16 der WO 2019/234249 A1 ist beschrieben, dass ein UAV Bilder einer problematischen Situation liefert, die anschließend anhand der vorab geladenen Daten analysiert werden, z. B. durch automatische Bilderkennungs- und Identifizierungsfunktionen, für die ein Rechensystem konfiguriert ist. Ein identifiziertes Problem wird anschließend gemeldet, und wenn es von den Systemen automatisch gelöst werden kann, z. B. anhand eines regelbasierten oder eines auf maschinellem Lernen basierenden Systems der künstlichen Intelligenz, wird automatisch eine Lösungs- oder weitere Untersuchungsroutine ausgelöst; sollte die automatische Lösung fehlschlagen, wird menschliche Unterstützung angefordert.

Aus der WO 2018/022837 A1 ist ein Verfahren zur Bearbeitung unter Einsatz von kollaborativen Robotern (Cobots) bekannt, welche mit einem menschlichen Bearbeiter zusammenwirken. Mittels einer dem Cobot zugeordneten Sensoranordnung werden Bildinformationen der Bearbeitungsumgebung ermittelt. Ausgehend von einem Fertigungsmodell und den Bildinformationen wird ein durch den Cobot durchzuführender Bearbeitungsplan festgelegt, wobei insbesondere Abweichungen in der Bearbeitungsumgebung zu einer Anpassung des Bearbeitungsplans führen. Dem Cobot werden mit dem Bearbeitungsplan letztlich vorbestimmte Aufgaben zugewiesen.

Der Ausgangspunkt der Erfindung ist hierbei, dass dem Cobot im Zusammenwirken mit dem Menschen üblicherweise lediglich eine passive Rolle zukommt. Der Cobot erledigt hierbei lediglich vordefinierte Aufgaben oder wird direkt vom Bearbeiter angesteuert, einzelne Verfahrensschritte vorzunehmen.

Der Erfindung liegt das Problem zugrunde, ein Verfahren zur Bearbeitung mindestens eines Flugzeugstrukturbauteils in einer Bearbeitungsumgebung unter Einsatz eines Cobots anzugeben, wobei die Flexibilität und Effektivität des Verfahrens weiter erhöht wird.

Das obige Problem wird bei einem Verfahren durch die Merkmale von Anspruch 1 gelöst.

Die vorschlagsgemäße Lösung geht davon aus, dass der Cobot über einen Manipulator mit mindestens einem Endeffektor zur Bearbeitung des Flugzeugstrukturbauteils und über eine Antriebsanordnung zum Bewegen des Cobots verfügt. Eine dem Cobot zugeordnete Sensoranordnung zum Ermitteln von Bildinformationen der Bearbeitungsumgebung ist vorgesehen.

In einer Arbeitsroutine wird das Flugzeugstrukturbauteil gemäß einem mittels einer Systemsteuerung erzeugten Bearbeitungsplan mit mindestens einer Bearbeitungsaktion bearbeitet.

Wesentlich ist nun der grundsätzliche Gedanke, dass die ermittelte Bildinformation an sich in vielen Fällen nicht ausreicht, um die Aktionen des Cobots mit möglichst weitgehender Autonomie vorzugeben. Die Auswertung der Bildinformation kann komplex sein, sodass der Cobot in vielen Fällen durch den Bearbeiter angeleitet werden muss.

Über einen Bildvergleich mit einer Bildvorlage wird vorliegend eine besonders zuverlässige Erkennung der anfallenden Bearbeitungsaufgaben ermöglicht. Mit dem weiteren Einbezug von Bearbeiterdaten in das Erzeugen des Bearbeitungsplans wird eine Optimierung der kollaborativen Bearbeitung erreicht.

Im Einzelnen wird vorgeschlagen, dass in einer Planungsroutine mittels der Sensoranordnung Bildinformationen über zumindest einen Abschnitt des Flugzeugstrukturbauteils ermittelt werden und dass mittels der Systemsteuerung die Bildinformationen mit einer vorgegebenen Bildvorlage eines bearbeiteten Flugzeugstrukturbauteils in einem Bildvergleich verglichen werden. Weiter wird vorgeschlagen, dass mittels der Systemsteuerung gemäß einer vorgegebenen Planungsvorschrift anhand des Ergebnisses des Bildvergleichs sowie anhand von Bearbeiterdaten des menschlichen Bearbeiters der Bearbeitungsplan für das Flugzeugstrukturbauteil erzeugt wird.

Im Bildvergleich kann in der bevorzugten Ausgestaltung gemäß Anspruch 3 auf Abweichungen zwischen Bildinformationen und Bildvorlage zurückgegriffen und diese als Bearbeitungsabschnitte klassifiziert werden. Bearbeitungsaktionen an den Bearbeitungsabschnitten können damit auf einfache und zuverlässige Weise anhand der Klassifikation festgelegt werden.

Die Erzeugung der Bildvorlage mittels eines CAD/CAM-Systems gemäß Anspruch 4 bietet die Möglichkeit, die Bildvorlage spezifisch für die jeweiligen Bildinformationen zu erstellen und zudem auch eine Bearbeitung von in den Bildinformationen nicht sichtbaren Abschnitten des Flugzeugstrukturbauteils zu berücksichtigen. Über das CAD/CAM-System können zudem eine Vielzahl verschiedener Flugzeugstrukturbauteile und deren vorgesehene Bearbeitung herangezogen werden. In der Ausgestaltung gemäß Anspruch 5 erfolgt eine Klassifikation des Flugzeugstrukturbauteils, sodass der Cobot für verschiedene Werkstücke weitgehend autonom eingesetzt werden kann.

Über das Angleichen von Bildvorlage und Bildinformation anhand einer Referenzlage gemäß Anspruch 6, beispielsweise durch Erzeugen einer entsprechenden Bildvorlage mittels des angesprochenen CAD/CAM-Systems, wird die Erkennungssicherheit im Bildvergleich weiter erhöht.

In der weiter bevorzugten Ausgestaltung gemäß Anspruch 7 ist eine Identifikation von weiteren Objekten vorgesehen, beispielweise von Hindernissen oder Anbauteilen, wodurch der Bearbeitungsplan optimal an die Bedingungen in der Bearbeitungsumgebung angepasst wird.

Der Einsatz von Planungsregeln in der Ausgestaltung gemäß Anspruch 8 erlaubt eine besonders einfache Umsetzung der Berücksichtigung der Randbedingungen wie der Anwesenheit des menschlichen Bearbeiters, um insbesondere sicherheitstechnische Anforderungen zu erfüllen.

Gemäß Anspruch 9 wird zudem in Betracht gezogen, dass manche Objekte mittels der Bildinformationen nicht ohne weiteres erkannt werden können. Hierbei kann der Cobot in einer aktiven Rolle eine Lernfahrt mit dem Bearbeiter durchführen, welche einem Anlernen oder Bearbeiten dieser Objekte dient.

Der Bearbeiter kann auch in der Ausgestaltung gemäß Anspruch 10 auf Erfüllen eines Fehlerkriteriums herangezogen werden. Anspruch 11 betrifft umgekehrt die Möglichkeit einer Anleitung des Bearbeiters durch den Cobot. Interessant ist auch eine Visualisierung des Bildvergleichs für den Bildbearbeiter, wodurch dem Bearbeiter bei Bedarf ein Eingreifen in den Bearbeitungsprozess und in den Bearbeitungsplan erleichtert wird.

Die dem Cobot zugeordnete Sensoranordnung ermöglicht weitergehend auch eine effektive Überwachung des Durchführens der Bearbeitungsaktionen, insbesondere um Qualitätskriterien einzuhalten (Anspruch 12).

In der Planungsroutine wird in der bevorzugten Ausgestaltung gemäß Anspruch 13 eine Priorisierung der Bearbeitungsaktionen, insbesondere für mehrere Flugzeugstrukturbauteile, berücksichtigt. Hiermit wird eine weitere Effektivitätssteigerung erreicht.

Die Planungsroutine kann auch auf Grundlage einer mit dem Cobot durchlaufenen Erkundungsroutine vorgenommen werden, was Gegenstand der Ansprüche 14 und 15 ist. Anspruch 15 betrifft zudem die besonders bevorzugten Varianten einer fortlaufend durchgeführten Planungsroutine, wodurch die Bearbeitung an den jeweiligen Stand angepasst wird. Beispielsweise können die Aufgaben des Cobots hiermit flexibel an die Handlungen des Bearbeiters angepasst werden.

Nach einer weiteren Lehre gemäß Anspruch 16, der eigenständige Bedeutung zukommt, wird eine Systemsteuerung zum Betrieb eines Cobots zur Bearbeitung mindestens eines Flugzeugstrukturbauteils in einer Bearbeitungsumgebung als solche beansprucht. Die vorschlagsgemäße Systemsteuerung kann hierbei die angesprochene Planungsroutine des vorschlagsgemäßen Verfahrens durchführen. Insoweit darf zur vorschlaggemäßen Systemsteuerung auf alle Ausführungen zu dem vorschlagsgemäßen Verfahren verwiesen werden.

Nach einer weiteren Lehre gemäß Anspruch 17, der ebenfalls eigenständige Bedeutung zukommt, wird ein Cobot zur Bearbeitung mindestens eines Flugzeugstrukturbauteils in einer Bearbeitungsumgebung, welcher eine vorschlagsgemäße Systemsteuerung aufweist, als solcher beansprucht. Auch insoweit darf auf alle Ausführungen zu dem vorschlagsgemäßen Verfahren verwiesen werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße Systemsteuerung sowie einen vorschlagsgemäßen Cobot in einer Bearbeitungsumgebung zur Durchführung des vorschlagsgemäßen Verfahrens,
- Fig. 2: ein schematisches Diagramm eines Bildvergleichs in einer Planungsroutine,
- Fig. 3: eine Veranschaulichung von Planungsregeln in der Planungsroutine, und
- Fig. 4: ein Ablaufdiagramm zum vorschlagsgemäßen Verfahren.

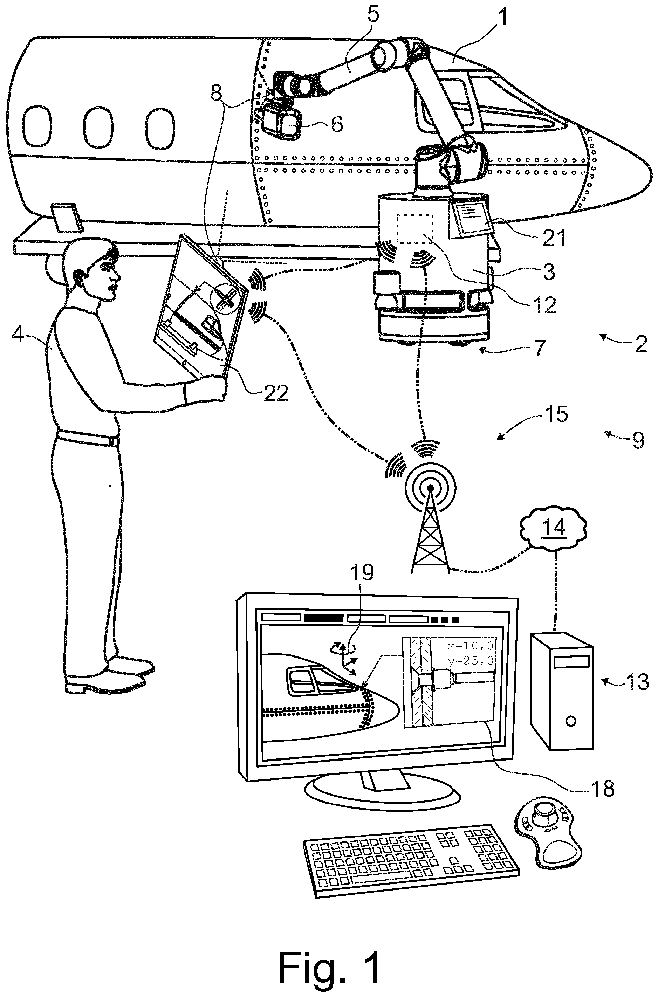

Die Erfindung betrifft ein Verfahren zur Bearbeitung mindestens eines Flugzeugstrukturbauteils 1 in einer Bearbeitungsumgebung 2 unter Einsatz eines Cobots 3 im Zusammenwirken mit einem menschlichen Bearbeiter 4. In Fig. 1 ist hierbei ein Teilbereich der Bearbeitungsumgebung 2 mit einem einzigen Flugzeugstrukturbauteil 1 angedeutet. Die Bearbeitungsumgebung 2 ist für die Durchführung einer Bearbeitung mittels des Cobots 2 vorgesehen und wird vorzugsweise durch eine Fertigungshalle, eine Fertigungsstraße oder Teilbereiche hiervon gebildet, in welcher grundsätzlich mehrere, auch verschiedenartige Flugzeugstrukturbauteile 1 bearbeitet werden können.

Der Cobot 3 verfügt über einen Manipulator 5 mit mindestens einem Endeffektor 6 zur Bearbeitung des Flugzeugstrukturbauteils 1. Grundsätzlich kann der Cobot für verschiedene Bearbeitungsaufgaben herangezogen werden und hierfür entsprechende Endeffektoren 6 vorgesehen sein. Insbesondere kann das Bearbeiten ein mechanisches Bearbeiten des Flugzeugstrukturbauteils 2 sein. Hier und vorzugsweise ist der Endeffektor 6 für ein Nieten, Bohren und/oder Fräsen des Flugzeugstrukturbauteils 2 eingerichtet. Der Manipulator 5 weist eine Kinematik zur Positionierung des Endeffektors 6 auf.

Der Cobot 3 verfügt zudem über eine Antriebsanordnung 7 zum Bewegen des Cobots 3, welche hier und vorzugsweise als Fahrwerksanordnung ausgebildet ist. Die Antriebsanordnung 7 erlaubt die Bewegung des Cobots 3 in der Bearbeitungsumgebung 2 und vorzugsweise den Betrieb des Cobots 3 als Automated Guided Vehicle (AGV).

Ferner ist eine dem Cobot 3 zugeordnete Sensoranordnung 8 zum Ermitteln von Bildinformationen der Bearbeitungsumgebung 2 vorgesehen. Ein Bildsensor der Sensoranordnung 8 kann am Cobot 3, vorzugsweise am Manipulator 5, angeordnet sein. Ebenfalls denkbar ist es, dass die Sensoranordnung 8 stationäre Bildsensoren der Bearbeitungsumgebung 2 oder vom Bearbeiter 4 getragene Bildsensoren aufweist. Hier und vorzugsweise ist eine Kamera zur zweidimensionalen Bilderfassung am Manipulator 5 des Cobots 3 vorgesehen, deren Bildinformationen insbesondere durch Bildinformationen einer vom Bearbeiter 4 bewegten mobilen Kamera ergänzt werden. Gemäß einer weiteren Ausgestaltung kann die Sensoranordnung 8 auch Abstandssensoren, vorzugsweise eine Lidar- und/oder Radareinrichtung aufweisen, welche auch bei der Fortbewegung des Cobots 3 herangezogen werden können.

In einer Arbeitsroutine wird das Flugzeugstrukturbauteil 1 gemäß einem mittels einer Systemsteuerung 9 erzeugten, noch zu erläuternden Bearbeitungsplan 10 mit mindestens einer Bearbeitungsaktion 11 bearbeitet. Unter einer Bearbeitungsaktion 11 wird allgemein eine Handlung oder eine Gruppe von Handlungen verstanden, die im Zusammenhang mit der Bearbeitung stehen. Beispielsweise umfasst eine Bearbeitungsaktion 11 ein Bohren eines Lochs, ein Bohren einer Reihe von benachbarten Löchern, eine Kombination aus Bohren und Senken, einen Nietvorgang oder dergleichen.

Die Systemsteuerung 9 ist hier und vorzugsweise dem Cobot 3 zugeordnet. Die Systemsteuerung 9 kann neben dem Erzeugen des Bearbeitungsplans auch weitere, auf den Cobot 3 bezogene steuerungstechnische Aufgaben wahrnehmen, beispielsweise die Ansteuerung der Antriebsanordnung 7 und/oder des Manipulators 5. Bei der Systemsteuerung 9 handelt es sich in der beispielhaften Darstellung in Fig. 1 um eine Zusammenstellung von dezentralen Steuerkomponenten, hier unter anderem einem Cobot-Steuergerät 12, einem Computergerät 13 sowie einem Cloud-Server 14, welche über ein Kommunikationsnetzwerk 15 miteinander kommunizieren. Ebenfalls kann es sich bei der Systemsteuerung 9 auch um ein zentrales, beispielsweise im Cobot 3 integriertes Steuergerät handelt. Denkbar ist auch die Verwendung von mehreren Cobots 3, welche jeweils über entsprechende dezentrale Cobot-Steuergeräte 12 gesteuert werden und miteinander vorzugsweise über das Kommunikationsnetzwerk 15 kommunizieren. Bei dem Kommunikationsnetzwerk handelt es sich beispielsweise um ein lokales, drahtloses Netzwerk, welches vorzugsweise an das Internet angebunden ist.

Wesentlich ist nun, dass in einer Planungsroutine mittels der Sensoranordnung 8 Bildinformationen 16 über zumindest einen Abschnitt des Flugzeugstrukturbauteils 1 ermittelt werden, dass mittels der Systemsteuerung 9 die Bildinformationen 16 mit einer vorgegebenen Bildvorlage 17 eines bearbeiteten Flugzeugstrukturbauteils 1 in einem Bildvergleich verglichen werden und dass mittels der Systemsteuerung 9 gemäß einer vorgegebenen Planungsvorschrift anhand des Ergebnisses des Bildvergleichs sowie anhand von Bearbeiterdaten des menschlichen Bearbeiters 4 der Bearbeitungsplan 10 für das Flugzeugstrukturbauteil 1 erzeugt wird.

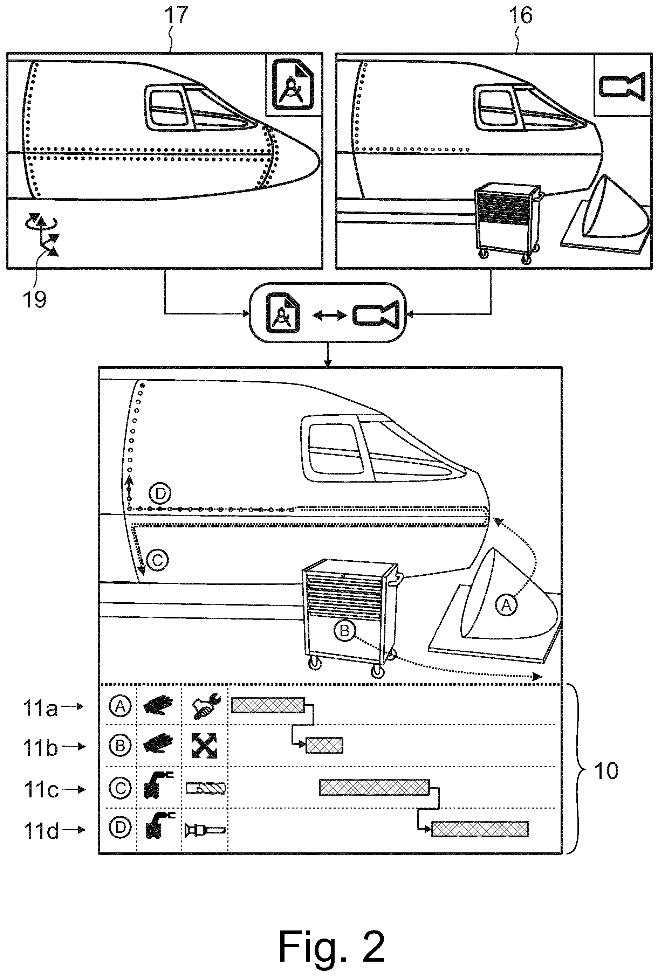

In Fig. 2 ist schematisch ein solcher Bildvergleich dargestellt, wobei die Bildvorlage 17 ein bearbeitetes Flugzeugstrukturbauteil 1 zeigt. Vorzugsweise besteht die Bildvorlage 17 ebenfalls in Bildinformationen, beispielsweise in einer computergenerierten grafischen Darstellung. Hier und vorzugsweise repräsentieren die mittels der Sensoranordnung 8 ermittelten Bildinformationen 16 den Ist-Zustand des Flugzeugstrukturbauteils 1, während die Bildvorlage 17 den Soll-Zustand des Flugzeugstrukturbauteils 1 darstellt. Bei dem bearbeiteten Flugzeugstrukturbauteil 1 handelt es sich nicht zwingend um ein abschließend bearbeitetes Flugzeugstrukturbauteil 1, vielmehr kann die Bildvorlage 17 auch für einen Zwischenschritt der gesamten Bearbeitung erzeugt sein.

Der Bearbeitungsplan 10 weist allgemein Vorgaben über die durchzuführenden Bearbeitungsaktionen 11 auf. Der erzeugte Bearbeitungsplan 10 sieht vorzugsweise mindestens eine automatisierte Bearbeitungsaktion 11c, 11d durch den Cobot 3 und mindestens eine manuelle Bearbeitungsaktion 11a, 11b durch den Bearbeiter 4 vor. Vorzugsweise gibt der Bearbeitungsplan 10 an, welche zeitliche Reihenfolge der Bearbeitungsaktionen 11 einzuhalten ist. In Fig. 2 ist beispielsweise eine vorgegebene Abfolge von Bearbeitungsaktionen 11a, 11b; 11c, 11d sowie eine zeitliche Überlappung der Durchführung der Bearbeitungsaktionen 11b und 11c vorgesehen. Ebenfalls kann ein genauer Zeitpunkt für eine Bearbeitungsaktion 11, eine Zeitdauer einer Bearbeitungsaktion 11 oder dergleichen vorgegeben sein. Weitere Parameter der Bearbeitungsaktion 11 wie zu verwendender Endeffektor 6, Bearbeitungsgeschwindigkeit oder dergleichen können ebenfalls im Bearbeitungsplan 10 enthalten sein.

Die Bearbeiterdaten beziehen sich vorzugsweise auf die Anwesenheit bzw. Verfügbarkeit des Bearbeiters 4, die im Rahmen des Verfahrens durch den Bearbeiter 4 auszuführenden Aufgaben oder dergleichen. Bei der Planungsvorschrift handelt es sich allgemein um eine Vorgabe dahingehend, wie der Bearbeitungsplan 10 anhand des Ergebnisses des Bildvergleichs sowie anhand der Bearbeiterdaten zu erzeugen ist. Die Planungsvorschrift kann beispielsweise auch über eine Optimierungsroutine umgesetzt sein, in welcher der Bearbeitungsplan 10 angesichts der Randbedingungen in Hinsicht auf vorbestimmte Kriterien optimiert wird. Über die Bearbeiterdaten kann im Bearbeitungsplan 10 der Beitrag des Bearbeiters 4 optimiert werden. Einerseits kann dem Cobot 3 eine möglichst weitgehende Autonomie zugewiesen werden, während andererseits dem Bearbeiter 4 für besonders kritische, etwa lediglich manuell durchzuführende, Aufgaben eine Anleitung durch den Cobot 3 zur Verfügung gestellt wird.

Weiter kann die Planungsvorschrift abhängig von Umgebungsparametern der Bearbeitungsumgebung sein. Die Umgebungsparameter geben hierbei allgemein Randbedingungen der Bearbeitungsumgebung 2 wie die Uhrzeit, Temperatur, Zugänglichkeit der Bearbeitungsumgebung 2, Lichtverhältnisse, Anwesenheit weiterer Personen neben dem Bearbeiter 4 oder dergleichen an.

Hier wird mittels der Systemsteuerung 9 in dem Bildvergleich anhand von Abweichungen zwischen der Bildinformation 16 und der Bildvorlage 17 mindestens ein Bearbeitungsabschnitt C, D des Flugzeugstrukturbauteils 2 in der Bildinformation 16 identifiziert. Die Identifikation erfolgt hier über eine Klassifikation, insbesondere über eine Mustererkennung in der Bildverarbeitung. In Fig. 2 sind beispielhaft Bearbeitungsabschnitte C, D gezeigt, welche anhand von Abweichungen im Bildvergleich identifiziert werden. Die Bearbeitungsabschnitte C, D werden klassifiziert, wobei Bearbeitungsabschnitt C als Bearbeitungsabschnitt mit fehlenden Bohrungen und Bearbeitungsabschnitt D als Bearbeitungsabschnitt mit fehlenden Bohrungen und fehlenden Nieten klassifiziert wird.

Gemäß der Planungsvorschrift wird hier im Bearbeitungsplan 10 mindestens eine Bearbeitungsaktion 11c, 11d an dem Bearbeitungsabschnitt C, D festgelegt. Die jeweilige Bearbeitungsaktion 11c, 11d ist abhängig von der Abweichung im Bildvergleich. Vorzugsweise wird die mindestens eine Bearbeitungsaktion 11c, 11d an dem Bearbeitungsabschnitt C, D abhängig von der Klassifikation des Bearbeitungsabschnitts C, D festgelegt. Hier wird für Bearbeitungsabschnitt C ein Bohren der Löcher in Bearbeitungsaktion 11c festgelegt. In der Planungsvorschrift wird vorzugsweise eine zeitliche Abfolge der Bearbeitungsaktionen 11 anhand von vorgegebenen Bedingungen festgelegt. Hier ist Bearbeitungsaktion 11d zum Nieten nach der Bearbeitungsaktion 11c festgelegt, damit in Bearbeitungsaktion 11d beide Bearbeitungsabschnitte C, D mit Nieten versehen werden können.

Gemäß der in Fig. 1 dargestellten und insoweit bevorzugten Ausgestaltung wird die Bildvorlage 17 mittels eines CAD/CAM-Systems der Systemsteuerung 9, welches hier auf dem Computergerät 13 läuft, basierend auf einem vorgegebenen Fertigungsmodell für das Flugzeugstrukturbauteil 2 erzeugt. Hier stellt das CAD/CAM-Systems eine grafische Darstellung des bearbeiteten Flugzeugstrukturbauteils 2 bereit, in welcher etwa die eingebrachten Bohrungen und Nietverbindungen in Bearbeitungsabschnitten C, D sichtbar sind. Mittels des CAD/CAM-Systems können zudem für Fertigungsabschnitte des Flugzeugstrukturbauteils 2 Bearbeitungsinformationen 18 hinterlegt werden. Ein Fertigungsabschnitt ist hier beispielsweise eine einzelne Nietverbindung. Die Bearbeitungsabschnitte C, D können insofern mehrere Fertigungsabschnitte beinhalten. Die Bearbeitungsaktion 11c, 11d an einem Bearbeitungsabschnitt C, D kann somit abhängig von den Bearbeitungsinformationen 18 für mindestens einen im Bearbeitungsabschnitt enthaltenen Fertigungsabschnitt festgelegt werden. Die Bearbeitungsinformationen 18 betreffen beispielsweise das zu verwendende Werkzeug, zu verwendende Bauteile und Werkstoffe, Maßtoleranzen oder dergleichen.

Grundsätzlich ist es denkbar, dass mehrere verschiedenartige Flugzeugstrukturbauteile 1 in der Bearbeitungsumgebung 2 vorhanden sind. Mittels der Systemsteuerung 9 wird das Flugzeugstrukturbauteil 1 hier anhand der Bildinformationen klassifiziert, beispielsweise anhand einer Mustererkennung, sodass der Cobot 3 wiederum weitgehend autonom agieren kann. Die Bildvorlage 17 wird abhängig von der Klassifikation des Flugzeugstrukturbauteils 1 erzeugt oder aus bereits erzeugten und hinterlegten Bildvorlagen 17 ausgewählt.

Insbesondere durch das angesprochene CAD/CAM-System ergibt sich zudem die Möglichkeit, die Bildvorlage 17 für eine Vereinfachung des Bildvergleichs an die Bildinformationen 16 anzupassen. Vorzugsweise wird in dem Bildvergleich eine Referenzlage des Flugzeugstrukturbauteils 2 in den Bildinformationen 16 ermittelt. Die Referenzlage kann hierbei eine relative Position zum Flugzeugstrukturbauteil 1 sowie eine Blickrichtung der Sensoranordnung 8 beinhalten. Die Referenzlage wird beispielsweise aus Markierungen am Flugzeugstrukturbauteil 1, an der Bearbeitungsumgebung 2, über ein Positionierungssystem des Cobots 3 und/oder über eine Bildauswertung, beispielsweise eine Erfassung des Umrisses des Flugzeugstrukturbauteils 1 vorgenommen. Die Referenzlage der Bildinformation 16 wird einer Referenzlage der Bildvorlage 17 angeglichen. Hier und vorzugsweise wird die anhand der Bildinformationen 16 ermittelte Referenzlage in ein Koordinatensystem 19 des CAD/CAM-Systems überführt. Die Bildvorlage 17 wird hier mit einer an die Referenzlage der Bildinformation 16 angeglichenen Referenzlage erzeugt und insbesondere zur weiteren Übereinstimmung mit der Bildinformation 16 skaliert.

Mittels der Systemsteuerung 9 wird in einer weiteren Ausgestaltung in dem Bildvergleich mindestens ein weiteres Objekt A, B in den Bildinformationen identifiziert und vorzugsweise klassifiziert. Unter einem weiteren Objekt werden hierbei Objekte verstanden, welche nicht unmittelbar dem Flugzeugstrukturbauteil 1 zuzuordnen sind. Bei den weiteren Objekten A, B kann es sich insofern um Hindernisse, Werkzeuge, Anbauteile und dergleichen handeln. Der gemäß der Planungsvorschrift festgelegte Bearbeitungsplan 10 sieht hier eine Bearbeitungsaktion 11a, 11b an dem mindestens einen weiteren Objekt A, B vor. Insbesondere ist hier ein Bewegen des weiteren Objekts B vorgesehen, welches als Hindernis den Bearbeitungsaktionen 11c, 11d entgegensteht. Ebenfalls kann ein Bearbeiten und/oder Fügen des weiteren Objekts an das Flugzeugstrukturbauteil 1 vorgesehen sein. Hier handelt es sich bei dem weiteren Objekt A um ein Anbauteil, welches zum Fügen an das Flugzeugstrukturbauteil 1 vorgesehen ist.

Vorzugsweise wird die Bearbeitungsaktion 11a, 11b an dem mindestens einen weiteren Objekt A, B abhängig von der Klassifikation des weiteren Objekts A, B festgelegt. Hierbei können in der Systemsteuerung 9 Klassen für die in Bearbeitungsumgebung gewöhnlicherweise auftauchenden Objekte hinterlegt sein.

Gemäß einer besonders bevorzugten Ausgestaltung ist in der Planungsvorschrift eine Zusammenstellung von möglichen Bearbeitungsaktionen 11 enthalten, denen jeweilige Planungsregeln 20 zugeordnet sind. Die Planungsregeln betreffen vorzugsweise die Bearbeiterdaten, die in der Bildinformation enthaltene Umgebung des Bearbeitungsabschnitts und/oder die Sichtbarkeit des Bearbeitungsabschnitts in der Bildinformation 16.

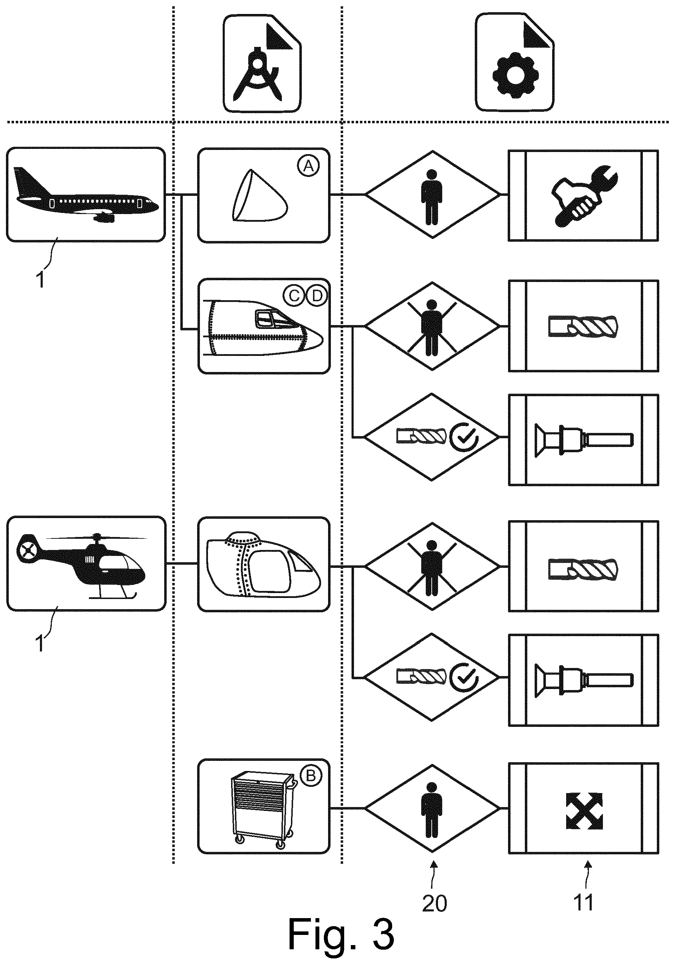

In Fig. 3 sind solche Planungsregeln 20 schematisch dargestellt. Beispielsweise erfordert die auf das weitere Objekt A bezogene Bearbeitungsaktion 11a die Anwesenheit des Bearbeiters 4. Auf den Bearbeitungsabschnitt C, D bezogene Bearbeitungsaktionen 11c, 11d erfordern dagegen beispielsweise die Abwesenheit des Bearbeiters, hier zur Einhaltung eines Sicherheitsabstands bei der automatisierten Bearbeitung. Die mit dem Setzen der Nieten verbundene Bearbeitungsaktion 11d bedingt beispielsweise die vorhergehende Prüfung der eingebrachten Bohrungen. In der Planungsroutine wird mittels der Systemsteuerung das Erfüllen der Planungsregeln 20 anhand der Bearbeiterdaten und/oder Bildinformation 16 geprüft. Eine mögliche Bearbeitungsaktion 11, deren zugeordnete Planungsregel 20 erfüllt ist, wird hier im Bearbeitungsplan 10 als Bearbeitungsaktion 11 festgelegt.

Im in Fig. 2 beispielhaft gezeigten Bearbeitungsplan 10 ist zudem eine zeitliche Reihenfolge der Bearbeitungsaktionen 11 vorgesehen, wobei hier zunächst ein manuelles Bearbeiten des Objekts A notwendig ist (Bearbeitungsaktion 11a), damit die Bearbeitungsaktion 11c erfolgen kann. Diese Reihenfolge kann abhängig von Bearbeiterdaten des menschlichen Bearbeiters 4 sein. Ist beispielsweise am Zeitpunkt des Beginns der Bearbeitung kein Bearbeiter 4 anwesend, wird dagegen die Bearbeitungsaktion 11d als erste Bearbeitungsaktion 11 ausgeführt, welcher keine manuelle Bearbeitungsaktion 11 notwendigerweise vorausgehen muss.

Gemäß einer weiteren Ausgestaltung wird in der angesprochenen Klassifizierung, unter anderem der Bearbeitungsabschnitte C, D, des Flugzeugstrukturbauteils 1 sowie der weiteren Objekte A, B, ein auf eine Klasse bezogener Erkennungsgrad ermittelt, wobei für den Erkennungsgrad ein Schwellwert vorgegeben ist. Nur auf ein Überschreiten des Schwellwerts durch den Erkennungsgrad wird eine Einordnung in eine Klasse festgelegt wird. Auf ein Unterschreiten des Schwellwerts durch den Erkennungsgrad kann dagegen der Bearbeitungsabschnitt A, B und/oder das zu klassifizierende Objekt als Anlern-Objekt eingeordnet werden.

Für solche als Anlern-Objekt eingeordnete Objekte ist insbesondere zunächst keine Bearbeitungsaktion 11 vorgesehen. Vielmehr können in einer Lernfahrtroutine als Anlern-Objekt eingeordnete Objekte vom Cobot 3 angefahren werden und der Bearbeiter 4 wird zum Durchführen einer Bearbeitungsaktion 11, insbesondere einem manuellen Klassifizieren des Objekts, aufgefordert. Das Auffordern kann über eine Benutzerschnittstelle, insbesondere über eine Benutzerschnittstelle 21 des Cobots 3 und/oder über ein Mobilgerät 22 des Bearbeiters 4, erfolgen. Beispielsweise werden auf der Benutzerschnittstelle 21 die objektbezogenen Bilddaten angezeigt, wobei die als Anlern-Objekte eingeordneten Objekte durch einen Hüllkörper, etwa eine Bounding Box, markiert werden. Alternativ oder zusätzlich kann der Cobot 3 auch eine Geste durchführen und beispielsweise mit dem Manipulator 5 auf das Objekt zeigen.

In dem manuellen Klassifizieren wird das Objekt vorzugsweise durch den Bearbeiter 4 in eine bereits vorgegebene Klasse oder in eine neu erzeugte Klasse eingeordnet. Hierbei kann das manuelle Klassifizieren für die zukünftige automatische Klassifizierung herangezogen werden, sodass der Automatisierungsgrad stetig erhöht wird.

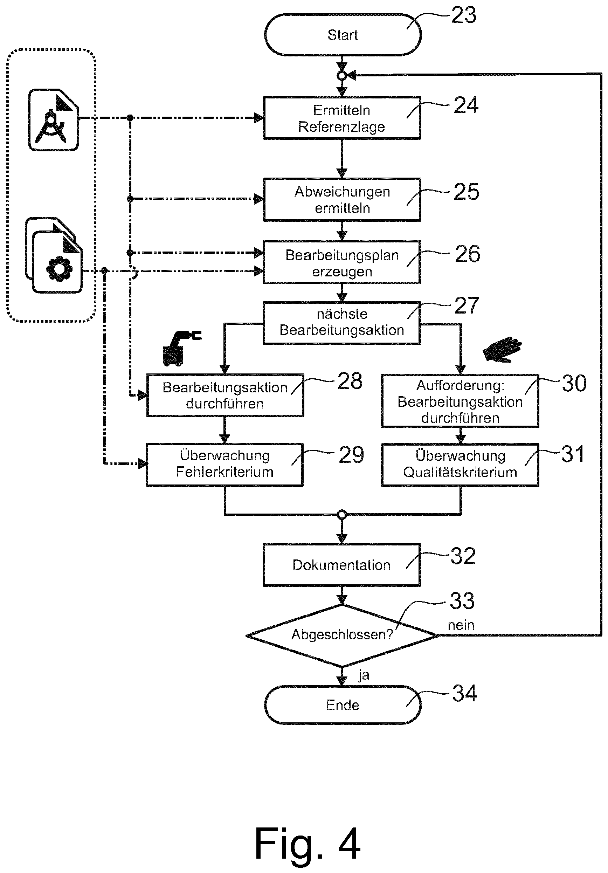

In Fig. 4 ist ein schematisches, beispielhaftes Ablaufdiagramm für das vorschlagsgemäße Verfahren gezeigt. In Aktion 23 wird der Ablauf gestartet, wobei ein in der Bearbeitungsumgebung 2 vorhandenes Flugzeugstrukturbauteil 1 selektiert wird und Bildinformationen 16 ermittelt werden. In Aktion 24 wird die Referenzlage des Flugzeugstrukturbauteils 1 in den Bildinformationen 16 ermittelt und die Bildvorlage 17 mit einer angeglichenen Referenzlage erzeugt. In Aktion 25 erfolgt im Bildvergleich anhand von Abweichungen die Identifikation und Klassifikation von Bearbeitungsabschnitten C, D und von weiteren Objekten A, B. In Aktion 26 wird der Bearbeitungsplan 10 gemäß der Planungsvorgabe erzeugt. Die Bearbeiterdaten können hierbei in der Systemsteuerung 9 hinterlegt sein und/oder ermittelt werden, insbesondere mittels der Sensoranordnung 8.

In Aktion 27 wird eine Bearbeitungsaktion 11 aus dem erzeugten Bearbeitungsplan 10 begonnen. Eine automatisierte Bearbeitungsaktion 11 und eine manuelle Bearbeitungsaktion 11 ist in Fig. 4 jeweils als Aktion 28, dargestellt.

Hier wird in der automatisierten Bearbeitungsaktion 11 durch den Cobot 3 in Aktion 28 mit Aktion 29 das Erfüllen eines Fehlerkriteriums überwacht. Auf Erfüllen eines Fehlerkriteriums wird die Bearbeitungsaktion 11 mittels der Systemsteuerung 9 im Bearbeitungsplan 10 abgeändert. Hier und vorzugsweise wird die automatisierte Bearbeitungsaktion 11 durch eine manuelle Bearbeitungsaktion 11 durch den Bearbeiter 4 ersetzt.

Gemäß einer weiteren Ausgestaltung kann, etwa bei der in Fig. 4 dargestellten manuellen Bearbeitungsaktion 11, mit Aktion 30 eine Aufforderung an den Bearbeiter 4 erfolgen. In der Arbeitsroutine, wenn der Bearbeitungsplan 10 eine manuelle Bearbeitungsaktion 11 durch den menschlichen Bearbeiter 4 vorsieht, wird der Bearbeiter 4 mittels der Systemsteuerung 9 zum Durchführen der Bearbeitungsaktion 11 aufgefordert. Die Aufforderung erfolgt vorzugsweise über eine Benutzerschnittstelle, etwa auf dem Mobilgerät 22 des Bearbeiters. Besonders bevorzugt ist ebenfalls eine Aufforderung über die Benutzerschnittstelle 21 des Cobots 3, etwa über eine Sprachausgabe, mittels eines Durchlaufens einer vorgegebenen Aufforderungsgeste des Cobots 3, etwa ein Zeigen auf das Objekt A, B mittels des Manipulators 5. Dem Cobot 3 kommt in dieser Ausgestaltung somit eine aktive Rolle in der Bearbeitung zu, wobei der Cobot 3 den menschlichen Bearbeiter 4 nicht nur durch die autonome Bearbeitung unterstützt, sondern den Bearbeiter 4 auch weitergehend anleitet.

In einer bevorzugten Ausgestaltung wird dem Bearbeiter 4 eine Visualisierung des Bildvergleichs und/oder der Bildvorgabe 17 bereitgestellt, beispielsweise auf dem Mobilgerät 22 oder der Benutzerschnittstelle 21 erfolgt. In der Visualisierung können die Bearbeitungsabschnitte C, D oder auch die weiteren Objekte A, B hervorgehoben werden. Ebenfalls kann die Aufforderung für eine manuelle Bearbeitungsaktion 11 in der Visualisierung erfolgen. Die Visualisierung des Bildvergleichs und/oder der Bildvorgabe 17 ergibt dem Bearbeiter 4 zudem die Möglichkeit, in eine automatisierte Bearbeitungsaktion 11 durch den Cobot 3 einzugreifen, beispielsweise indem der Bearbeiter die Bearbeitungsaktion 11 abändert. Hierzu kann der Bearbeiter 4 die Bearbeitungsaktion 11 insbesondere mittels des Mobilgeräts 22 als manuelle Bearbeitungsaktion 11 vorgeben und/oder auf die Bearbeitungsaktion 11 bezogene Bearbeitungsinformationen ändern.

Hier und vorzugsweise wird in Aktion 31 das Durchführen einer Bearbeitungsaktion 11, insbesondere einer manuellen Bearbeitungsaktion 11 durch den menschlichen Bearbeiter 4, mittels der Sensoranordnung 9 überwacht. Hierbei werden von der Sensoranordnung 9 auf das Durchführen der Bearbeitungsaktion 11 bezogene Sensordaten ermittelt und hier weiter in Aktion 32 mittels der Systemsteuerung 9 hinterlegt, um eine Dokumentation der Bearbeitungsaktionen 11 zu erstellen.

Das Durchführen der Bearbeitungsaktion mittels der Systemsteuerung 9 kann anhand der Sensordaten auf Erfüllen eines vorgegebenen Qualitätskriteriums überprüft werden, wobei vorzugsweise das Ergebnis des Überprüfens des Qualitätskriteriums mittels der Systemsteuerung 9 hinterlegt und/oder dem Bearbeiter 4 ausgegeben wird.

In Aktion 33 wird geprüft, ob die Bearbeitung abgeschlossen ist. Soweit eine weitere Bearbeitung ansteht, ist hier vorgesehen, dass wiederum Aktion 23 erfolgt und erneut Bildinformationen 16 ermittelt werden. Ist die Bearbeitung abgeschlossen, ist der hier dargestellte Ablauf mit Aktion 34 abgeschlossen. Gegebenenfalls schließt sich dann die Bearbeitung eines nächsten Flugzeugstrukturbauteils 1 an. Denkbar ist ebenfalls, dass im Bearbeitungsplan 10 mit aufeinander folgenden Bearbeitungsaktionen 11 verschiedene Flugzeugstrukturbauteile 1 bearbeitet werden.

Gemäß einer weiteren bevorzugten Ausgestaltung wird in der Planungsroutine eine zeitliche Reihenfolge der Bearbeitungsaktionen 11 für mehrere Bearbeitungsabschnitte C, D, insbesondere mehrerer Flugzeugstrukturbauteile 1, im Bearbeitungsplan 10 anhand einer Priorisierung festgelegt. Vorzugsweise ist die Priorisierung als Priorisierungsvorgabe in der Planungsvorschrift enthalten und/oder ist durch den Bearbeiter 4 vorgegeben, beispielsweise über eine Abfrage der Priorisierung über das Mobilgerät 22 und eine Eingabe des Bearbeiters 4. Vorzugsweise wird die zeitliche Reihenfolge von Bearbeitungsaktionen 11 anhand der Priorisierung vorgegeben, womit höher priorisierte Bearbeitungsabschnitte C, D und Flugzeugstrukturbauteile 1 möglichst zuerst bearbeitet werden.

In einer Erkundungsroutine können mittels des Cobots 3 Objekte in der Bearbeitungsumgebung 2 angefahren werden, wobei mittels der Sensoranordnung 8 Bildinformationen der Objekte ermittelt werden. Die Objekte werden anhand der Bildinformationen, insbesondere als Flugzeugstrukturbauteile 2 und weitere Objekte A, B, klassifiziert.

Gemäß einer bevorzugten Ausgestaltung wird die Planungsroutine im Anschluss an die Erkundungsroutine und/oder während der Erkundungsroutine durchgeführt. Die mit der Erkundungsroutine erfolgte Klassifizierung der Objekte kann somit die Grundlage für die Planungsroutine bilden, wobei vorzugsweise die zeitliche Reihenfolge von Bearbeitungsaktionen 11 anhand der Priorisierung festgelegt wird.

Gemäß einer besonders bevorzugten Ausgestaltung wird die Planungsroutine fortlaufend in der Arbeitsroutine durchgeführt. Hiermit kann der Bearbeitungsplan 10 fortlaufend an die gegebenen Bedingungen angepasst werden. Werden beispielsweise einzelne Bearbeitungsaktionen 11 bereits durch den Bearbeiter 4 erledigt, kann der Bearbeitungsplan 10 erneut erzeugt werden, um einen optimalen Prozessablauf zu gewährleisten.

Nach einer weiteren Lehre, der eigenständige Bedeutung zukommt, wird die angesprochene Systemsteuerung 9, welche dem Betrieb eines Cobots 3 zur Bearbeitung mindestens eines Flugzeugstrukturbauteils 1 in einer Bearbeitungsumgebung 2 im Zusammenwirken mit einem menschlichen Bearbeiter 4 dient, als solche beansprucht. Die Systemsteuerung 9 legt einen Bearbeitungsplan 10 mit mindestens einer Bearbeitungsaktion 11 fest, gemäß welchem in einer Arbeitsroutine das Flugzeugstrukturbauteil 1 bearbeitet wird. Wesentlich ist hierbei, dass die Systemsteuerung 9 in einer Planungsroutine mittels der Sensoranordnung 8 ermittelte Bildinformationen 16 über zumindest einen Abschnitt des Flugzeugstrukturbauteils 1 mit einer vorgegebenen Bildvorlage 17 eines bearbeiteten Flugzeugstrukturbauteils 1 in einem Bildvergleich vergleicht und dass die Systemsteuerung 9 gemäß einer vorgegebenen Planungsvorschrift anhand des Ergebnisses des Bildvergleichs sowie anhand von Bearbeiterdaten des menschlichen Bearbeiters 4 den Bearbeitungsplan 10 für das Flugzeugstrukturbauteil 1 erzeugt. Auf alle Ausführungen zu dem vorschlagsgemäßen Verfahren darf insoweit verwiesen werden.

Nach einer weiteren Lehre, der ebenfalls eigenständige Bedeutung zukommt, wird ein Cobot 3 zur Bearbeitung mindestens eines Flugzeugstrukturbauteils 1 in einer Bearbeitungsumgebung 2 als solcher beansprucht. Der Cobot 3 verfügt über einen Manipulator 5 mit mindestens einem Endeffektor 6 zum Bearbeiten des Flugzeugstrukturbauteils 1, über eine Antriebsanordnung 7 zum Bewegen des Cobots 3 sowie über eine Sensoranordnung 8 zum Ermitteln von Bildinformationen der Bearbeitungsumgebung 2. Der Cobot 3 weist eine vorschlagsgemäße Systemsteuerung 9 auf. Insoweit darf ebenfalls auf alle Ausführungen zu dem vorschlagsgemäßen Verfahren verwiesen werden.

## Patentansprüche

1. Verfahren zur Bearbeitung mindestens eines Flugzeugstrukturbauteils (1) in einer Bearbeitungsumgebung (2) unter Einsatz eines Cobots (3) im Zusammenwirken mit einem menschlichen Bearbeiter (4), wobei der Cobot (3) über einen Manipulator (5) mit mindestens einem Endeffektor (6) zur Bearbeitung des Flugzeugstrukturbauteils (1) und über eine Antriebsanordnung (7) zum Bewegen des Cobots (3) verfügt, wobei eine dem Cobot (3) zugeordnete Sensoranordnung (8) zum Ermitteln von Bildinformationen der Bearbeitungsumgebung (1) vorgesehen ist, wobei in einer Arbeitsroutine das Flugzeugstrukturbauteil gemäß einem mittels einer Systemsteuerung (9) erzeugten Bearbeitungsplan (10) mit mindestens einer Bearbeitungsaktion (11) bearbeitet wird,
wobei in einer Planungsroutine mittels der Sensoranordnung (8) Bildinformationen (16) über zumindest einen Abschnitt des Flugzeugstrukturbauteils (1) ermittelt werden, wobei mittels der Systemsteuerung (9) die Bildinformationen (16) mit einer vorgegebenen Bildvorlage (17) eines bearbeiteten Flugzeugstrukturbauteils (1) in einem Bildvergleich verglichen werden und wobei mittels der Systemsteuerung (9) gemäß einer vorgegebenen Planungsvorschrift anhand des Ergebnisses des Bildvergleichs sowie anhand von Bearbeiterdaten des menschlichen Bearbeiters (4) der Bearbeitungsplan (10) für das Flugzeugstrukturbauteil (1) erzeugt wird,
wobei mittels der Systemsteuerung (9) in dem Bildvergleich anhand von Abweichungen zwischen der Bildinformation (16) und der Bildvorlage (17) mindestens ein Bearbeitungsabschnitt (C, D) des Flugzeugstrukturbauteils (1) in der Bildinformation (16) klassifiziert wird und wobei gemäß der Planungsvorschrift im Bearbeitungsplan (10) mindestens eine Bearbeitungsaktion (11c, 11d) an dem Bearbeitungsabschnitt (C, D) festgelegt wird,
wobei in der Klassifizierung ein auf eine Klasse bezogener Erkennungsgrad ermittelt wird, wobei für den Erkennungsgrad ein Schwellwert vorgegeben ist und nur auf ein Überschreiten des Schwellwerts durch den Erkennungsgrad eine Einordnung in eine Klasse festgelegt wird.

2. Verfahren nach Anspruch 1, **dadurch gekennzeichnet, dass** der Bearbeitungsplan (10) mindestens eine automatisierte Bearbeitungsaktion (11c, 11d) durch den Cobot (3) vorsieht und mindestens eine manuelle Bearbeitungsaktion (11a, 11b) durch den Bearbeiter (4) vorsieht.

3. Verfahren nach Anspruch 1 oder 2, **dadurch gekennzeichnet, dass** die mindestens eine Bearbeitungsaktion (11c, 11d) an dem Bearbeitungsabschnitt (C, D) abhängig von der Klassifikation des Bearbeitungsabschnitts (C, D) festgelegt wird.

4. Verfahren nach einem der vorhergehenden Ansprüche, **dadurch gekennzeichnet, dass** die Bildvorlage (17) mittels eines CAD/CAM-Systems der Systemsteuerung (9) basierend auf einem vorgegebenen Fertigungsmodell für das Flugzeugstrukturbauteil (1) erzeugt wird, vorzugsweise, dass mittels des CAD/CAM-Systems für Fertigungsabschnitte des Flugzeugstrukturbauteils (1) Bearbeitungsinformationen (18) hinterlegt werden, und dass die Bearbeitungsaktion (11c, 11d) an einem Bearbeitungsabschnitt (C, D) abhängig von den Bearbeitungsinformationen (18) für mindestens einen im Bearbeitungsabschnitt (C, D) enthaltenen Fertigungsabschnitt festgelegt wird.

5. Verfahren nach einem der vorhergehenden Ansprüche, **dadurch gekennzeichnet, dass** mittels der Systemsteuerung (9) das Flugzeugstrukturbauteil (1) anhand der Bildinformationen (16) klassifiziert wird, und dass die Bildvorlage (17) abhängig von der Klassifikation des Flugzeugstrukturbauteils (1) erzeugt oder aus hinterlegten Bildvorlagen (17) ausgewählt wird.

6. Verfahren nach einem der vorhergehenden Ansprüche, **dadurch gekennzeichnet, dass** in dem Bildvergleich eine Referenzlage des Flugzeugstrukturbauteils (1) in den Bildinformationen (16) ermittelt wird und dass die Referenzlage der Bildinformation (16) einer Referenzlage der Bildvorlage (17) angeglichen wird, vorzugsweise, dass die Bildvorlage (17) mit einer an die Referenzlage der Bildinformation (16) angeglichenen Referenzlage erzeugt wird.

7. Verfahren nach einem der vorhergehenden Ansprüche, **dadurch gekennzeichnet, dass** mittels der Systemsteuerung (9) in dem Bildvergleich mindestens ein weiteres Objekt (A, B) in den Bildinformationen (16) identifiziert, vorzugsweise klassifiziert, wird, und dass der gemäß der Planungsvorschrift erzeugte Bearbeitungsplan (10) eine Bearbeitungsaktion (11a, 11b) an dem mindestens einen weiteren Objekt (A, B) vorsieht, insbesondere ein Bewegen, Bearbeiten und/oder Fügen des weiteren Objekts (A, B) an das Flugzeugstrukturbauteil (1), vorzugsweise, dass die Bearbeitungsaktion (11a, 11b) an dem mindestens einen weiteren Objekt (A, B) abhängig von der Klassifikation des weiteren Objekts (A, B) festgelegt wird.

8. Verfahren nach einem der vorhergehenden Ansprüche, **dadurch gekennzeichnet, dass** in der Planungsvorschrift eine Zusammenstellung von möglichen Bearbeitungsaktionen (11) enthalten ist, denen jeweilige Planungsregeln (20) zugeordnet sind, welche vorzugsweise die Bearbeiterdaten, die in der Bildinformation (16) erfasste Umgebung des Bearbeitungsabschnitts (C, D) und/oder die Sichtbarkeit des Bearbeitungsabschnitts (C, D) in der Bildinformation (16) betreffen, dass in der Planungsroutine mittels der Systemsteuerung (9) das Erfüllen der Planungsregeln (20) anhand der Bearbeiterdaten und/oder Bildinformation (16) geprüft wird und dass eine mögliche Bearbeitungsaktion (11), deren zugeordnete Bearbeitungsregel (20) erfüllt ist, im Bearbeitungsplan (10) als Bearbeitungsaktion (11) festgelegt wird.

9. Verfahren nach einem Ansprüche 3 bis 8, **dadurch gekennzeichnet, dass** auf ein Unterschreiten des Schwellwerts durch den Erkennungsgrad der Bearbeitungsabschnitt (C, D) und/oder das zu klassifizierende Objekt (A, B) als Anlern-Objekt eingeordnet wird, vorzugsweise, dass in einer Lernfahrtroutine als Anlern-Objekt eingeordnete Objekte vom Cobot (3) angefahren werden und der Bearbeiter (4) zum Durchführen einer Bearbeitungsaktion, insbesondere einem manuellen Klassifizieren, aufgefordert wird.

10. Verfahren nach einem der vorhergehenden Ansprüche, **dadurch gekennzeichnet, dass** auf Erfüllen eines Fehlerkriteriums in der Arbeitsroutine in einer Bearbeitungsaktion (11), insbesondere in einer automatisierten Bearbeitungsaktion (11c, 11d), die Bearbeitungsaktion (11) mittels der Systemsteuerung (9) im Bearbeitungsplan (10) abgeändert, vorzugsweise durch eine manuelle Bearbeitungsaktion (11) durch den Bearbeiter (4) ersetzt, wird.

11. Verfahren nach einem der vorhergehenden Ansprüche, **dadurch gekennzeichnet, dass** in der Arbeitsroutine, wenn der Bearbeitungsplan (10) eine manuelle Bearbeitungsaktion (11a, 11b) durch den menschlichen Bearbeiter (4) vorsieht, der Bearbeiter (4) mittels der Systemsteuerung (9), insbesondere mittels des Cobots (3) und/oder mittels einer Ausgabe einer Aufforderung auf einem Mobilgerät (22) des Bearbeiters (4), zum Durchführen der Bearbeitungsaktion (11a, 11b) aufgefordert wird, und/oder, dass dem Bearbeiter (4) eine Visualisierung des Bildvergleichs und/oder der Bildvorgabe (17) bereitgestellt wird.

12. Verfahren nach einem der vorhergehenden Ansprüche, **dadurch gekennzeichnet, dass** das Durchführen einer Bearbeitungsaktion (11), insbesondere durch den menschlichen Bearbeiter (4), mittels der Sensoranordnung (8) überwacht wird, vorzugsweise, dass von der Sensoranordnung (8) ermittelte, auf das Durchführen der Bearbeitungsaktion (11) bezogene Sensordaten mittels der Systemsteuerung (9) hinterlegt werden und/oder dass das Durchführen der Bearbeitungsaktion (11) mittels der Systemsteuerung (9) anhand der Sensordaten auf Erfüllen eines vorgegebenen Qualitätskriteriums überprüft wird.

13. Verfahren nach einem der vorhergehenden Ansprüche, **dadurch gekennzeichnet, dass** in der Planungsroutine eine zeitliche Reihenfolge der Bearbeitungsaktionen (11c, 11d) für mehrere Bearbeitungsabschnitte (C, D), insbesondere mehrerer Flugzeugstrukturbauteile (1), im Bearbeitungsplan (10) anhand einer Priorisierung festgelegt wird, vorzugsweise, dass die Priorisierung als Priorisierungsvorgabe in der Planungsvorschrift enthalten ist und/oder durch den Bearbeiter (4) vorgegeben wird.

14. Verfahren nach einem der vorhergehenden Ansprüche, **dadurch gekennzeichnet, dass** in einer Erkundungsroutine mittels des Cobots (3) Objekte in der Bearbeitungsumgebung (1) angefahren werden, dass mittels der Sensoranordnung Bildinformationen der Objekte ermittelt werden und dass die Objekte anhand der Bildinformationen, insbesondere als Flugzeugstrukturbauteile (1) und weitere Objekte (A, B), klassifiziert werden.

15. Verfahren nach einem der vorhergehenden Ansprüche, **dadurch gekennzeichnet, dass** die Planungsroutine im Anschluss an die Erkundungsroutine und/oder während der Erkundungsroutine durchgeführt wird, und/oder, dass die Planungsroutine fortlaufend in der Arbeitsroutine durchgeführt wird.

16. Systemsteuerung zum Betrieb eines Cobots (3) zur Bearbeitung mindestens eines Flugzeugstrukturbauteils (1) in einer Bearbeitungsumgebung (2) im Zusammenwirken mit einem menschlichen Bearbeiter (4), wobei der Cobot (3) über einen Manipulator (5) mit mindestens einem Endeffektor (6) zur Bearbeitung des Flugzeugstrukturbauteils (1) und über eine Antriebsanordnung (7) zum Bewegen des Cobots (3) verfügt, wobei eine dem Cobot (3) zugeordnete Sensoranordnung (8) zum Ermitteln von Bildinformationen der Bearbeitungsumgebung (2) vorgesehen ist, wobei die Systemsteuerung (9) einen Bearbeitungsplan (10) mit mindestens einer Bearbeitungsaktion (11) erzeugt, gemäß welchem in einer Arbeitsroutine das Flugzeugstrukturbauteil bearbeitet wird,
wobei die Systemsteuerung (9) in einer Planungsroutine mittels der Sensoranordnung (8) ermittelte Bildinformationen (16) über zumindest einen Abschnitt des Flugzeugstrukturbauteils (1) mit einer vorgegebenen Bildvorlage (17) eines bearbeiteten Flugzeugstrukturbauteils (1) in einem Bildvergleich vergleicht und wobei die Systemsteuerung (9) gemäß einer vorgegebenen Planungsvorschrift anhand des Ergebnisses des Bildvergleichs sowie anhand von Bearbeiterdaten des menschlichen Bearbeiters (4) den Bearbeitungsplan (10) für das Flugzeugstrukturbauteil (1) erzeugt, wobei mittels der Systemsteuerung (9) in dem Bildvergleich anhand von Abweichungen zwischen der Bildinformation (16) und der Bildvorlage (17) mindestens ein Bearbeitungsabschnitt (C, D) des Flugzeugstrukturbauteils (1) in der Bildinformation (16) klassifiziert wird und wobei gemäß der Planungsvorschrift im Bearbeitungsplan (10) mindestens eine Bearbeitungsaktion (11c, 11d) an dem Bearbeitungsabschnitt (C, D) festgelegt wird, wobei in der Klassifizierung ein auf eine Klasse bezogener Erkennungsgrad ermittelt wird, wobei für den Erkennungsgrad ein Schwellwert vorgegeben ist und nur auf ein Überschreiten des Schwellwerts durch den Erkennungsgrad eine Einordnung in eine Klasse festgelegt wird.

17. Cobot zur Bearbeitung mindestens eines Flugzeugstrukturbauteils (1) in einer Bearbeitungsumgebung (2), wobei der Cobot (3) über einen Manipulator (5) mit mindestens einem Endeffektor (6) zum Bearbeiten des Flugzeugstrukturbauteils (1), über eine Antriebsanordnung (7) zum Bewegen des Cobots (3) sowie über eine Sensoranordnung (8) zum Ermitteln von Bildinformationen der Bearbeitungsumgebung (1) verfügt und wobei der Cobot (3) eine Systemsteuerung nach Anspruch 16 aufweist.

## Claims

1. Method for processing at least one aircraft structural component (1) in a processing environment (2) using a cobot (3) in interaction with a human operator (4), wherein the cobot (3) has a manipulator (5) with at least one end effector (6) for processing the aircraft structural component (1) and has a drive arrangement (7) for moving the cobot (3), wherein a sensor arrangement (8) assigned to the cobot (3) is provided for the purpose of determining image information relating to the processing environment (1), wherein, in a work routine, the aircraft structural component is processed with at least one processing action (11) in accordance with a processing plan (10) generated by means of a system controller (9),
wherein, in a planning routine, image information (16) about at least one section of the aircraft structural component (1) is determined by means of the sensor arrangement (8), wherein, by means of the system controller (9), the image information (16) is compared with a predefined image template (17) of a processed aircraft structural component (1) in an image comparison, and wherein, by means of the system controller (9), according to a predefined planning rule, the processing plan (10) for the aircraft structural component (1) is produced on the basis of the result of the image comparison and on the basis of operator data relating to the human operator (4),
wherein at least one processing section (C, D) of the aircraft structural component (1) is classified in the image information (16) by means of the system controller (9) in the image comparison on the basis of discrepancies between the image information (16) and the image template (17), and wherein at least one processing action (11c, 11d) on the processing section (C, D) is defined according to the planning rule in the processing plan (10),
wherein a degree of recognition related to a class is determined in the classification, wherein a threshold value is predefined for the degree of recognition and a classification into a class is defined only if the degree of recognition exceeds the threshold value.

2. Method according to Claim 1, **characterized in that** the processing plan (10) provides at least one automated processing action (11c, 11d) by the cobot (3) and provides at least one manual processing action (11a, 11b) by the operator (4).

3. Method according to Claim 1 or 2, **characterized in that** the at least one processing action (11c, 11d) on the processing section (C, D) is defined depending on the classification of the processing section (C, D).

4. Method according to one of the preceding claims, **characterized in that** the image template (17) is generated by means of a CAD/CAM system of the system controller (9) on the basis of a predefined manufacturing model for the aircraft structural component (1), preferably **in that** processing information (18) is stored by means of the CAD/CAM system for manufacturing sections of the aircraft structural component (1), and **in that** the processing action (11c, 11d) on a processing section (C, D) is defined depending on the processing information (18) for at least one manufacturing section contained in the processing section (C, D).

5. Method according to one of the preceding claims, **characterized in that** the aircraft structural component (1) is classified on the basis of the image information (16) by means of the system controller (9), and **in that** the image template (17) is generated or selected from stored image templates (17) depending on the classification of the aircraft structural component (1).

6. Method according to one of the preceding claims, **characterized in that** a reference position of the aircraft structural component (1) in the image information (16) is determined in the image comparison, and **in that** the reference position of the image information (16) is matched to a reference position of the image template (17), preferably **in that** the image template (17) is generated with a reference position matched to the reference position of the image information (16).

7. Method according to one of the preceding claims, **characterized in that** at least one further object (A, B) in the image information (16) is identified, preferably classified, by means of the system controller (9) in the image comparison, and **in that** the processing plan (10) generated according to the planning rule provides for a processing action (11a, 11b) on the at least one further object (A, B), in particular moving, processing and/or joining of the further object (A, B) to the aircraft structural component (1), preferably **in that** the processing action (11a, 11b) on the at least one further object (A, B) is defined depending on the classification of the further object (A, B).

8. Method according to one of the preceding claims, **characterized in that** the planning rule contains a compilation of possible processing actions (11) which are assigned respective planning rules (20) which preferably relate to the operator data, the environment of the processing section (C, D) captured in the image information (16) and/or the visibility of the processing section (C, D) in the image information (16), **in that**, in the planning routine, the compliance with the planning rules (20) is checked by means of the system controller (9) on the basis of the operator data and/or image information (16), and **in that** a possible processing action (11), the assigned processing rule (20) of which is complied with, is defined in the processing plan (10) as a processing action (11).

9. Method according to one of Claims 3 to 8, **characterized in that** the processing section (C, D) and/or the object (A, B) to be classified is/are classified as a learning object if the degree of recognition falls below the threshold value, preferably in that objects classified as a learning object in a learning trip routine are approached by the cobot (3) and the operator (4) is requested to perform a processing action, in particular a manual classification.

10. Method according to one of the preceding claims, **characterized in that**, upon complying with an error criterion in the work routine, in a processing action (11), in particular in an automated processing action (11c, 11d), the processing action (11) is modified by means of the system controller (9) in the processing plan (10), preferably replaced by a manual processing action (11) by the operator (4).

11. Method according to one of the preceding claims, **characterized in that**, in the work routine, if the processing plan (10) provides for a manual processing action (11a, 11b) by the human operator (4), the operator (4) is requested to perform the processing action (11a, 11b) by means of the system controller (9), in particular by means of the cobot (3) and/or by outputting a request on a mobile device (22) of the operator (4), and/or **in that** a visualization of the image comparison and/or of the image specification (17) is provided to the operator (4).

12. Method according to one of the preceding claims, **characterized in that** the performance of a processing action (11), in particular by the human operator (4), is monitored by means of the sensor arrangement (8), preferably **in that** sensor data determined by the sensor arrangement (8) and related to the performance of the processing action (11) are stored by means of the system controller (9), and/or **in that** the performance of the processing action (11) is checked for compliance with a predefined quality criterion by means of the system controller (9) on the basis of the sensor data.

13. Method according to one of the preceding claims, **characterized in that**, in the planning routine, a temporal sequence of the processing actions (11c, 11d) for a plurality of processing sections (C, D), in particular a plurality of aircraft structural components (1), is defined in the processing plan (10) on the basis of a prioritization, preferably **in that** the prioritization is contained as a prioritization specification in the planning rule and/or is specified by the operator (4).

14. Method according to one of the preceding claims, **characterized in that** objects in the processing environment (1) are approached in an exploration routine by means of the cobot (3), **in that** image information relating to the objects is determined by means of the sensor arrangement, and **in that** the objects are classified on the basis of the image information, in particular as aircraft structural components (1) and further objects (A, B).

15. Method according to one of the preceding claims, **characterized in that** the planning routine is performed following the exploration routine and/or during the exploration routine, and/or **in that** the planning routine is performed continuously in the work routine.

16. System controller for operating a cobot (3) for processing at least one aircraft structural component (1) in a processing environment (2) in interaction with a human operator (4), wherein the cobot (3) has a manipulator (5) with at least one end effector (6) for processing the aircraft structural component (1) and has a drive arrangement (7) for moving the cobot (3), wherein a sensor arrangement (8) assigned to the cobot (3) is provided for the purpose of determining image information relating to the processing environment (2), wherein the system controller (9) generates a processing plan (10) with at least one processing action (11), according to which the aircraft structural component is processed in a work routine, wherein, in a planning routine, the system controller (9) compares image information (16), determined by means of the sensor arrangement (8) and relating to at least one section of the aircraft structural component (1), with a predefined image template (17) of a processed aircraft structural component (1) in an image comparison, and wherein the system controller (9) generates the processing plan (10) for the aircraft structural component (1) according to a predefined planning rule on the basis of the result of the image comparison and on the basis of operator data relating to the human operator (4), wherein, by means of the system controller (9), at least one processing section (C, D) of the aircraft structural component (1) in the image information (16) is classified in the image comparison on the basis of discrepancies between the image information (16) and the image template (17), and wherein, in accordance with the planning rule, in the processing plan (10), at least one processing action (11c, 11d) on the processing section (C, D) is defined, wherein a degree of recognition related to a class is determined in the classification, wherein a threshold value is predefined for the degree of recognition and a classification into a class is defined only if the degree of recognition exceeds the threshold value.

17. Cobot for processing at least one aircraft structural component (1) in a processing environment (2), wherein the cobot (3) has a manipulator (5) with at least one end effector (6) for processing the aircraft structural component (1), has a drive arrangement (7) for moving the cobot (3) and has a sensor arrangement (8) for determining image information relating to the processing environment (1), and wherein the cobot (3) has a system controller according to Claim 16.

## Revendications

1. Procédé d'usinage d'au moins un composant structurel (1) d'aéronef dans un environnement d'usinage (2) en utilisant un cobot (3) en coopération avec un opérateur (4) humain, le cobot (3) disposant d'un manipulateur (5) avec au moins un effecteur d'extrémité (6) pour usiner le composant structurel (1) d'aéronef et d'un ensemble d'entraînement (7) pour déplacer le cobot (3), un ensemble de capteurs (8) associé au cobot (3) étant prévu pour déterminer des informations d'image de l'environnement d'usinage (1), le composant structurel d'aéronef étant usiné selon un plan d'usinage (10) généré au moyen d'une commande de système (9) avec au moins une action d'usinage (11) dans une routine de travail,
des informations d'image (16) sur au moins une section du composant structurel (1) d'aéronef étant déterminées au moyen de l'ensemble de capteurs (8) dans une routine de planification, les informations d'image (16) étant comparées à un modèle d'image (17) spécifié d'un composant structurel (1) d'aéronef usiné dans une comparaison d'images au moyen de la commande de système (9) et le plan d'usinage (10) pour le composant structurel (1) d'aéronef étant généré à l'aide du résultat de la comparaison d'images et à l'aide de données d'opérateur de l'opérateur (4) humain conformément à une instruction de planification spécifiée au moyen de la commande de système (9),
au moins une section d'usinage (C, D) du composant structurel (1) d'aéronef dans les informations d'image (16) étant classifiée, au moyen de la commande de système (9), dans la comparaison d'images à l'aide d'écarts entre les informations d'image (16) et le modèle d'image (17) et au moins une action d'usinage (11c, 11d) sur la section d'usinage (C, D) étant définie dans le plan d'usinage (10) conformément à l'instruction de planification,
un degré de reconnaissance lié à une classe étant déterminé dans la classification, une valeur de seuil étant spécifiée pour le degré de reconnaissance et une classification dans une classe étant définie que si la valeur de seuil est dépassée par le degré de reconnaissance.

2. Procédé selon la revendication 1, **caractérisé en ce que** le plan d'usinage (10) prévoit au moins une action d'usinage automatisée (11c, 11d) par le cobot (3) et prévoit au moins une action d'usinage manuelle (11a, 11b) par l'opérateur (4).

3. Procédé selon la revendication 1 ou 2, **caractérisé en ce que** l'au moins une action d'usinage (11c, 11d) sur la section d'usinage (C, D) est définie en fonction de la classification de la section d'usinage (C, D).

4. Procédé selon l'une des revendications précédentes, **caractérisé en ce que** le modèle d'image (17) est généré au moyen d'un système CAD/CAM de la commande de système (9) sur la base d'un modèle de production spécifié pour le composant structurel (1) d'aéronef, de préférence que des informations d'usinage (18) sont enregistrées moyen du système CAD/CAM pour des sections de production du composant structurel (1) d'aéronef, et que l'action d'usinage (11c, 11d) sur une section d'usinage (C, D) est définie en fonction des informations d'usinage (18) pour au moins une section de production contenue dans la section d'usinage (C, D).

5. Procédé selon l'une des revendications précédentes, **caractérisé en ce que** le composant structurel (1) d'aéronef est classifié au moyen de la commande de système (9) à l'aide des informations d'image (16), et que le modèle d'image (17) est généré en fonction de la classification du composant structurel (1) d'aéronef ou est sélectionné parmi des modèles d'image (17) enregistrés.

6. Procédé selon l'une des revendications précédentes, **caractérisé en ce que** lors de la comparaison d'images, une position de référence du composant structurel (1) d'aéronef est déterminée dans les informations d'image (16) et que la position de référence des informations d'image (16) est ajustée à une position de référence du modèle d'image (17), de préférence que le modèle d'image (17) est généré avec une position de référence ajustée à la position de référence des informations d'image (16).

7. Procédé selon l'une des revendications précédentes, **caractérisé en ce qu'**au moins un autre objet (A, B) dans les informations d'image (16) est identifié, de préférence classifié, dans la comparaison d'images au moyen de la commande de système (9), et que le plan d'usinage (10) généré conformément à l'instruction de planification prévoit une action d'usinage (11a, 11b) sur l'au moins un autre objet (A, B), en particulier un déplacement, un usinage et/ou un assemblage de l'autre objet (A, B) sur le composant structurel (1) d'aéronef, de préférence que l'action d'usinage (11a, 11b) est définie sur l'au moins un autre objet (A, B) en fonction de la classification de l'autre objet (A, B).

8. Procédé selon l'une des revendications précédentes, **caractérisée en ce qu'**une compilation d'actions d'usinage (11) possibles est contenue dans l'instruction de planification, auxquelles sont associées des règles de planification (20) respectives, qui concernent de préférence les données d'usinage, l'environnement de la section d'usinage (C, d) détecté dans les informations d'image (16) et/ou la visibilité de la section d'usinage (C, D) dans les informations d'image (16), que le respect des règles de planification (20) est vérifié à l'aide des données d'usinage et/ou des informations d'image (16) au moyen de la commande de système (9) dans la routine de planification et qu'une action d'usinage (11) possible, dont la règle d'usinage (20) associée est respectée, est définie dans le plan d'usinage (10) comme une action d'usinage (11).

9. Procédé selon l'une des revendications 3 à 8, **caractérisé en ce que** la section d'usinage (C, D) et/ou l'objet (A, B) à classifier sont classifiés comme un objet d'apprentissage si la valeur de seul n'est pas dépassée par le degré de reconnaissance, de préférence que le cobot (3) aborde des objets classifiés en tant qu'objets d'apprentissage dans une routine d'apprentissage et l'opérateur (4) est invité à effectuer une opération d'usinage, en particulier une classification manuelle.

10. Procédé selon l'une des revendications précédentes, **caractérisé en ce que** si un critère d'erreur dans la routine de travail est respecté dans une action d'usinage (11), en particulier dans une action d'usinage automatisée (11c, 11d), l'action d'usinage (11) est modifiée au moyen de la commande de système (9) dans le plan d'usinage (10), de préférence est remplacée par une action d'usinage manuelle (11) par l'opérateur (4).

11. Procédé selon l'une des revendications précédentes, **caractérisé en ce que** dans la routine de travail, lorsque le plan d'usinage (10) prévoit une action d'usinage manuelle (11a, 11b) par l'opérateur (4) humain, l'opérateur (4) est invité à effectuer l'action d'usinage (11a, 11b) au moyen de la commande de système (9), en particulier au moyen du cobot (3) et/ou au moyen d'une sortie d'une requête sur un appareil mobile (22) de l'opérateur (4), et/ou qu'une visualisation de la comparaison d'images et/ou du modèle d'image (17) est fournie à l'opérateur (4).

12. Procédé selon l'une des revendications précédentes, **caractérisé en ce que** l'exécution d'une action d'usinage (11), en particulier par l'opérateur (4) humain, est surveillée au moyen de l'ensemble de capteurs (8), de préférence que des données de capteur déterminées par l'ensemble de capteurs (8), se rapportant à l'exécution de l'action d'usinage (11), sont enregistrées au moyen de la commande de système (9) et/ou que l'exécution de l'action d'usinage (11) au moyen de la commande de système (9) est vérifiée à l'aide des données de capteur pour vérifier le respect d'un critère de qualité spécifié.

13. Procédé selon l'une des revendications précédentes, **caractérisé en ce que** dans la routine de planification, une séquence temporelle des actions d'usinage (11c, 11d) pour plusieurs sections d'usinage (C, D), en particulier plusieurs composants structurels (1) d'aéronef, est définie dans le plan d'usinage (10) à l'aide d'une hiérarchisation, de préférence que la hiérarchisation est contenue dans l'instruction de planification en tant que spécification de hiérarchisation et/ou est spécifiée par l'opérateur (4).

14. Procédé selon l'une des revendications précédentes, **caractérisé en ce que** des objets sont approchés dans l'environnement d'usinage (1) dans une routine de recherche au moyen du cobot (3), que des informations d'image des objets sont déterminées au moyen de l'ensemble de capteurs et que les objets sont classifiés à l'aide des informations d'image, en particulier en tant que composants structurels (1) d'aéronef et d'autres objets (A, B).

15. Procédé selon l'une des revendications précédentes, **caractérisé en ce que** la routine de planification est exécutée après la routine de recherche et/ou pendant la routine de recherche, et/ou que la routine de planification est exécutée en continu dans la routine de travail.

16. Commande de système destinée à faire fonctionner un cobot (3) pour l'usinage d'au moins un composant structurel (1) d'aéronef dans un environnement d'usinage (2) en coopération avec un opérateur (4) humain, le cobot (3) disposant d'un manipulateur (5) avec au moins un effecteur d'extrémité (6) pour usiner le composant structurel (1) d'aéronef et d'un ensemble d'entraînement (7) pour déplacer le cobot (3), un ensemble de capteurs (8) associé au cobot (3) étant prévu pour déterminer des informations d'image de l'environnement d'usinage (2), la commande de système (9) générant un plan d'usinage (10) avec au moins une action d'usinage (11), selon laquelle le composant structurel d'aéronef est usiné dans une routine de travail, la commande de système (9) comparant des informations d'image (16) déterminées au moyen de l'ensemble de capteurs (8) dans une routine de planification sur au moins une section du composant structurel (1) d'aéronef à un modèle d'image (17) spécifié d'un composant structurel (1) d'aéronef usiné dans une comparaison d'images, et la commande de système (9) générant le plan d'usinage (10) pour le composant structurel (1) d'aéronef à l'aide du résultat de la comparaison d'images et à l'aide de données d'usinage de l'opérateur (4) humain conformément à une instruction de planification spécifiée, au moins une section d'usinage (C, D) du composant structurel (1) d'aéronef étant classifiée dans les informations d'image (16) à l'aide d'écarts entre les informations d'image (16) et le modèle d'image (17) lors de la comparaison d'images au moyen de la commande de système (9) et au moins une action d'usinage (11c, 11d) sur la section d'usinage (C, D) étant définie dans le plan d'usinage (10) conformément à l'instruction de planification, un degré de reconnaissance lié à une classe étant déterminé dans la classification, une valeur de seuil étant spécifiée pour le degré de reconnaissance et une classification dans une classe étant définie seulement si la valeur de seuil est dépassée par le degré de reconnaissance.

17. Cobot pour l'usinage d'au moins un composant structurel (1) d'aéronef dans un environnement d'usinage (2), le cobot (3) disposant d'un manipulateur (5) avec au moins un effecteur d'extrémité (6) pour l'usinage du composant structurel (1) d'aéronef, d'un ensemble d'entraînement (7) pour déplacer le cobot (3) ainsi que d'un ensemble de capteurs (8) pour déterminer des informations d'image de l'environnement d'usinage (1) et le cobot (3) composant une commande de système selon la revendication 16.
